# EUROPEAN PATENT APPLICATION

(11) **EP 0 537 870 A1**
(43) Date of publication of application: **21.04.1993**
(21) Application number: 92250293.5
(22) Date of filing: 12.10.1992
(51) Int. Cl.: C08F 220/04, C04B 24/26

(54) **Copolymers of ethylenically unsaturated ethers useful as hydraulic cement superplasticizers**

(30) Priority: 18.10.1991 US 779201
(71) Applicant: W.R. Grace & Co.-Conn., New York, New York 10036 (US)
(72) Inventor: Arfaei, Ahmad, Chelmsford, Massachusetts 01824 (US); Jardine, Leslie A., Lowell, Massachusetts 01851 (US)
(74) Representative: UEXKÜLL & STOLBERG

(57) **Abstract**

In the present invention copolymers of certain ethers and olefinic mono- acids (or salts or in some cases esters thereof) have been discovered to be effective superplasticizers for hydraulic cements. When admixed into wet cement compositions these polymeric compounds give the cement mixture higher slump and lower slumploss over time. Alternatively, the copolymers of this invention may be used in preparing a cement mixture requiring less water, to yield a hardened cement with greater compressive strength.

## Description

### FIELD OF THE INVENTION

This invention relates to hydraulic cement admixtures, particularly to certain organic additives for hydraulic cement compositions which impart to the wet cement composition greater plasticity, lower slumploss over time, and water reduction capability.

### BACKGROUND OF THE INVENTION

Various types of organic compounds have been used to advantageously alter certain properties of wet hydraulic cement compositions. One class of compounds, which can collectively be called "superplasticizers", fluidify or plasticize the wet cement composition to obtain a more fluid composition at a given water to cement ratio. A controlled fluidity is desired, such that the aggregate used in mortars and concretes does not segregate from the cement paste. Alternatively, superplasticizers may allow the cement composition to be prepared using a lower water to cement ratio, in order to obtain a composition having a desired consistency (often leading to a hardened cement composition having a greater compressive strength after setting.)

A good superplasticizer should not only fluidify the wet cement composition to which it is added, but maintain that level of fluidity over a desired period of time. This time should be long enough to keep the wet cement composition fluid, for example, in a ready-mix truck while it is on its way to a job site, while the truck is idling at the job site, and while the cement composition is being worked into the desired final form. However, the cement mixture cannot remain fluid for too long, i.e., the set must not be greatly be retarded, because this will hold up work on the job.

Commonly known types of superplasticizers include: melamine sulfonate-formaldehyde condensates, napthalenesulfonate-formaldehyde condensates, lignosulfonates, polysaccharides, hydroxycarboxylic acids and their salts, and carbohydrates.

Despite the availability of the superplasticizers named above, it has been desired to come up with new superplasticizers which are an improvement over the current art.

It is thus an object of this invention to provide a new hydraulic cement superplasticizer which imparts to wet hydraulic cement compositions excellent slump and slump retention over time.

Further objects of this invention are to provide hydraulic cement compositions containing the superplasticizers of this invention, and a method for preparing the same.

### SUMMARY OF THE INVENTION

The present invention relates to copolymers of an olefinic mono-carboxylic acid comonomer or an ester or salt thereof, or an olefinic sulfur acid comonomer or a salt thereof, copolymerized with an ether comonomer of the formula

^{X-O-R¹ ; **(I)**}

wherein X represents an ethylenically-unsaturated hydrocarbon group having from 2 to 5 carbon atoms or an unsaturated acyl group having from 2 to 5 carbon atoms, R¹ is a polyalcohol group, an alkylene oxide derivative of the polyalcohol group, or a polyether of the formula

-(R²O-)ₙ-R³ ,

wherein R² is a linear or branched, substituted or unsubstituted C₁ to C₄ alkylene group, R³ is hydrogen, a C₁ to C₄ alkyl group, or a group conforming to the formula 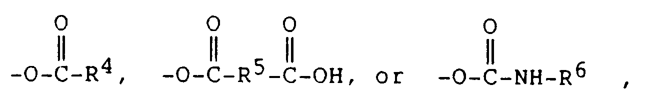
wherein R⁴, R⁵, and R⁶ may each be an alkyl, aryl, aralkyl, or alkaryl group, and n is an integer from 1 to 50.

Another embodiment of the present invention relates to a copolymer of an ether of the formula described above, and a mixture of olefinic mono-carboxylic acids (or salts or esters thereof) or sulfur acids (or salts thereof).

Yet another embodiment of the present invention relates to a copolymer of a mixture of ethers of the formula described above, and an olefinic mono-carboxylic acid (or salts or esters thereof) or sulfur acid (or salts thereof).

Further embodiments of the present invention are directed towards a cement composition comprising a hydraulic cement binder and a copolymer of the invention, and a method for preparing said cement composition.

### BRIEF DESCRIPTION OF THE DRAWINGS

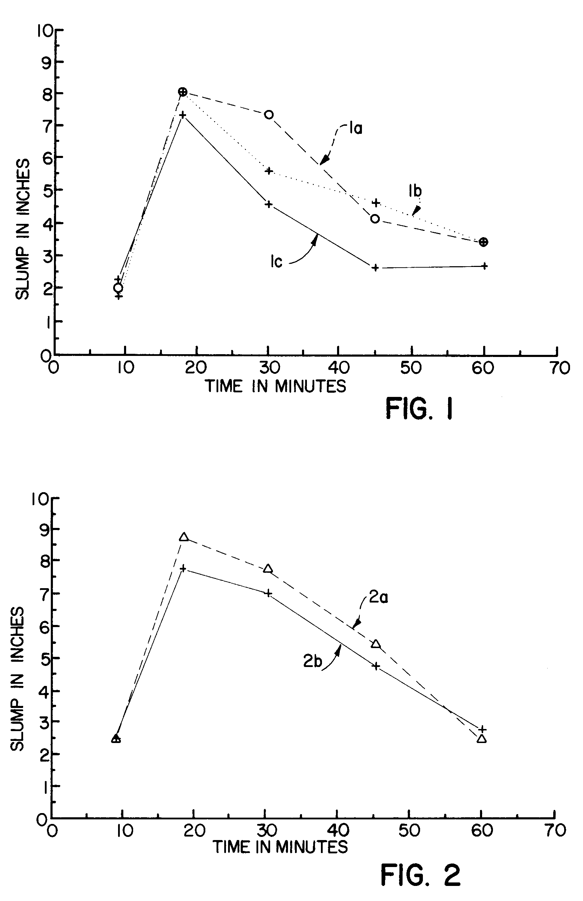

Figures 1 and 2 are graphical illustrations of the slumploss over time of concrete samples containing superplasticizers of the invention.

### DETAILED DESCRIPTION OF THE INVENTION

It has been discovered that copolymers of certain olefinic, i.e., ethylenically-unsaturated, ethers and certain olefinic compounds as described herein are very effective as superplasticizers when admixed into hydraulic cement slurries. Hydraulic cement slurries containing the superplasticizers of this invention also exhibit a low slumploss over time.

As used herein, the term "superplasticizer" refers to a class of compounds which are capable of functioning as water-reducing admixtures or superplasticizers, depending on the compound and the amount of it added to a cement composition. "Water-reducing admixture" and "superplasticizer" are terms of art which reference the relative water-reducing ability of a material. Water-reducing admixtures provide a water reduction capability of 5% to 12% (ASTM C-494 Type A or Type D), while superplasticizers provide water reduction in excess of 12% (ASTM C-494 Type F or Type G.) Superplasticizers also produce flowing concrete according to ASTM C-1017. For brevity and convenience the copolymers of this invention are referred to herein simply as superplasticizers. This term includes copolymers of this invention which function as water reducing admixtures or superplasticizers, as defined above.

The term "cement composition" as used herein refers to pastes, mortars, grouts such as oil well cementing grouts, and concrete compositions comprising a hydraulic cement binder. The terms "paste", "mortar" and "concrete" are terms of art; pastes are mixtures composed of a hydraulic cement binder (usually, but not exclusively, Portland cement, and may also include fly ash, blast furnace slag, and silica fume) and water; mortars are pastes additionally including fine aggregate, and concretes are mortars additionally including coarse aggregate. Such compositions may additionally include other admixtures such as defoaming agents, other water-reducers, air-entraining or detraining agents, set accelerators and retarders, and other components known to those in the art for altering properties of the composition.

The cement compositions of this invention are formed by mixing required amounts of certain materials, e.g., a hydraulic cement, water, and fine or coarse aggregate, as may be applicable to make the particular cement composition being formed.

The olefinic acid comonomer of the invention may be an olefinic mono-carboxylic acid or a salt or ester thereof, or an olefinic sulfur acid or a salt thereof. By "olefinic acid" is meant any organic acid containing at least one polymerizable carbon-carbon double bond, exemplified by the presence of a vinyl or allyl group.

If an olefinic mono-carboxylic acid is used, exemplary acids are: propenoic (acrylic), 2-methylpropenoic (methacrylic), trans-2-butenoic (crotonic), and cis-2-butenoic (isocrotonic). A preferred acid is acrylic acid. An alkali metal salt of the acid may also be utilized; a preferred example of this would be sodium or potassium acrylate, and more preferably, sodium acrylate. In the alternative, a mixture of the acid and its salt, may be employed in the invention. Further, an ester of an olefinic mono-carboxylic acid such as an alkyl or hydroxyalkyl ester, may be utilized. Suitable examples of such esters are methylacrylate, ethylacrylate, hydroxymethylacrylate, and hydroxyethylacrylate.

By olefinic sulfur acids is meant acids containing at least one polymerizable carbon-carbon double bond, and a sulfur acid group such as -SO₃H. Examples of these acids are allyl sulfonic acid, vinyl sulfonic acid, 2-acrylamido-2-methyl-1-propanesulfonic acid, or 2-sulfoethylmethacrylic acid, preferably vinyl sulfonic acid. As similarly stated above, alkali metal salts of such acids, or mixtures of the acid and its salt, may also be employed, preferably, sodium or potassium salts of vinyl sulfonic acid.

In some instances, it may be advantageous to optimize the performance of the superplasticizer of the invention by copolymerizing two or more olefinic comonomers as described herein with the ether comonomer of the invention.

The ether comonomer used in the present invention is of the general formula

X-O-R¹ ; **(I)**

wherein X represents an ethylenically-unsaturated hydrocarbon group having from 2 to 5 carbon atoms, e.g., allyl, methallyl, vinyl, 3-butenyl, 4-pentenyl, 3-methyl-3-butenyl, acryl, methacryl, vinylacetyl, and allylacetyl groups, or an unsaturated acyl group having from 2 to 5 carbon atoms, e.g., acryl and ethacryl groups. R¹ is a polyalcohol group, an alkylene oxide derivative of the polyalcohol group, or a polyether of the formula

-(R²O-)ₙ-R³ , **(II)**

wherein R² is a linear or branched, substituted or unsubstituted C₁ to C₄ alkylene group, R³ is hydrogen, a C₁ to C₄ alkyl group, or a group conforming to the formula 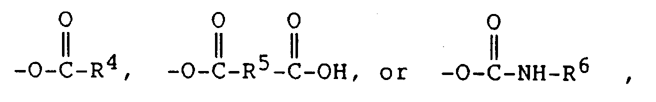
wherein R⁴, R⁵, and R⁶ may each be an alkyl, aryl, aralkyl, or alkaryl group, and n is an integer from 1 to 50.

When ether comonomers having a polyalcohol group as the R¹ moiety as described herein are used in the invention, the polyalcohol group may be, for example: 1,2-ethanediol (ethylene glycol), 1,2-propanediol, 1,3-propanediol, 1,2,3-propanetriol (glycerol), 1,2-butanediol, 1,3-butanediol, 1,4-butanediol, 1,2,4-butanetriol, polyvinylalcohol, glucose or sucrose. A preferred polyalcohol group is a glycerol group.

R¹ may also be an alkylene oxide derivative of the aforementioned polyalcohol group. One or more of the hydroxyl groups on the polyalcohol group may be so derivatized to provide one or more hydroxyl-terminated polyether groups on the polyalcohol group. For example, glycerol allyl ether can be derivatized with ethylene oxide to provide a product of the formula 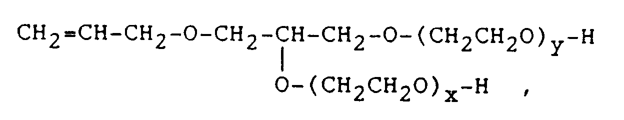
wherein x and y are integers which depend on the amount of ethylene oxide reagent used.

Alternately, the R¹ group may be a polyether of Formula II, as described above. R² is preferably a linear alkylene group of the formula CₙH₂ₙ, wherein n is an integer from 1 to 4, although R² may also be branched and/or substituted (for instance, with hydroxyl groups). R³ may be hydrogen, a linear alkyl group of the formula CₙH₂ₙ₊₁ wherein n is a number from 1 to 4, or other organic groups as described herein. A preferred polyether for use in the invention is one where n is in the range of from 5 to 20, R² is ethylene, and R³ is hydrogen.

Additionally, R³ may be an organic group conforming to the formula 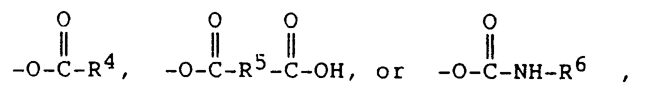
wherein R⁴, R⁵, and R⁶ may each be an alkyl, aryl, aralkyl, e.g., benzyl, or alkaryl, e.g., tolyl, group. Such R³ groups may be provided by appropriate reaction of a hydroxyl-terminated allylic ether of Formula I with a carboxylic acid, acid halide, acid anhydride, or an isocyanate. An exemplary reaction which provides an acetate-capped ether comonomer of the invention is illustrated as follows:

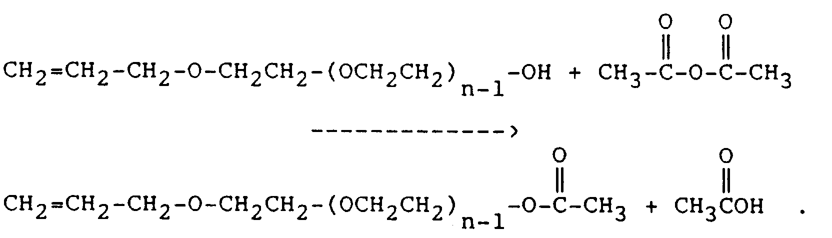

In some instances, it may be advantageous to optimize the performance of the superplasticizer of the invention by copolymerizing two or more ether comonomers as described herein with the olefinic comonomer of the invention.

The mole ratio of the olefinic comonomer(s) to the ether comonomer(s) in the superplasticizer polymer is preferably from about 1:0.01 to 0.5:1, with a more preferred ratio of from about 1:0.3 to 0.7:1.

Other monomers, such as styrene, or acrylamide, may be copolymerized with the ether and olefinic acid constituents in the course of the polymerization process, which is described below.

The polymerization is carried out in an oxygen-free atmosphere. A measured amount of a solvent sufficient to dissolve an ether of the invention is added to a reaction vessel. To this is added a measured amount of the ether. If R¹ is a polyalcohol group or alkylene oxide-derivatized polyalcohol group or if R³ in the ether used is hydrogen, water is a preferred solvent, or optionally, a water and alcohol (such as isopropanol) mixture may be employed. If R³ is other than hydrogen, an organic solvent such as toluene may be used.

The mixture is heated and a polymerization promoter is added to the mixture. A redox initiator system comprising reducing and oxidizing reagents, preferably a system of sodium hypophosphite hydrate and a persulfate (preferably ammonium persulfate) is used; these reagents are preferably used in polymerizations carried out in water solvent. A mixture of the oxidizing agent, the olefinic comonomer, and any other comonomers to be polymerized, is added gradually and simultaneously to the mixture in the reaction vessel containing the ether, at an elevated temperature, e.g., about 60°C to 90°C, which is below the reflux temperature. If water/alcohol solvent mixtures or pure organic solvents are alternately used, a persulfate, or an organic initiator, e.g., benzoyl peroxide, may be used as the polymerization promoter.

After the monomer addition is complete, the mixture is refluxed for an appropriate "post-cook" period. Alternately, the temperature during the post-cook period may be lower than the reflux temperature. If the solvent used is organic (or has an organic component), it is then distilled out of the mixture. The reaction product is cooled and the polymer is neutralized with a base, such as an alkali or alkaline earth metal-containing base, an amine, or an alkanolamine. An aqueous solution of sodium hydroxide is preferred for this purpose. After any necessary dilution, the polymer is ready for addition to a cement composition in a desired dosage.

The amount of superplasticizer admixed into the hydraulic cement composition should be an effective amount to either allow reduction of the water content while retaining equivalent slump of a blank composition, or increase the slump while maintaining the water to cement ratio, whichever is desired. The specific amount of this superplasticizer admixture for either purpose can be readily determined and will depend on the cement composition, the ratio of components of the composition, and the degree of fluidity desired. Generally the amount will be at least 0.005 weight percent, and usually in the range of 0.01 to 1.0 weight percent, based on the weight of hydraulic cement binder in the composition. A more preferred amount, similarly based, is about 0.02 to 0.25 weight percent.

The superplasticizer admixture of this invention can be added to cement compositions in any conventional manner familiar to those in the art. The superplasticizer should be substantially uniformly mixed with the cement composition.

The following examples are given for illustrative purposes only. Unless otherwise indicated, all parts and proportions are by weight.

### Example 1

A superplasticizer polymer of the present invention was made according to the following procedure. 150.0g of distilled water was added to a glass four neck, 500ml flask, fitted with a TEFLON® paddle stirrer, two addition funnels, a condenser, nitrogen inlet and a thermocouple with temperature controller regulating a heating mantle. To this flask was added 102.0g (0.185 moles) of a commercially available allylic ether, APEG-550 (Union Carbide), chemical formula CH₂=CHCH₂O(CH₂CH₂O)ₙH, average molecular weight 550g/mole.

A nitrogen purge was started to remove oxygen from the reaction vessel, and the contents were heated to 80°C. 3.0g of sodium hypophosphite hydrate was added to the reaction vessel contents.

Next, 2.0g of ammonium persulfate, dissolved in 40.0g of distilled water, and 28.0g (0.388 moles) of acrylic acid were added, simultaneously and incrementally to the reaction vessel contents over a period of one hour. Each component was introduced using its own addition funnel. The temperature of the reaction vessel contents was maintained at 80°C.

After the addition of the components above was complete, the mixture was heated for an additional hour at 80°C. The temperature was then raised to water reflux, about 100°C, and the reaction vessel contents were heated for an additional 4.5 hours of "post-cook" time.

The heat was then turned off and the reaction vessel contents were allowed to cool. The contents of the vessel were acidic, and were neutralized by adding 39.3g of a 40% solution of sodium hydroxide in water. The total solids concentration of the resultant sodium hydroxide-neutralized copolymer solution was about 41%.

### Example 2

A superplasticizer terpolymer of the present invention was made to demonstrate the utility of such a terpolymer practiced in accordance with the present invention.

Similar equipment and conditions as in Example 1 were used. 204.0g (0.37 moles) of APEG-550 and 6.0 g of sodium hypophosphite hydrate were in the initial mixture. 22.4g acrylic acid (0.311 moles), 5.6g (0.08 moles) of acrylamide, and 4.0g of ammonium persulfate were added as in Example 1 over a 2.0 hour period, and the post-cook time was 3.5 hours at 100° C. The total solids concentration of the resultant sodium hydroxide-neutralized copolymer solution was about 41%.

### Example 3

A superplasticizer copolymer of the present invention was made as in Example 1. 64.9g (0.186 moles) of a commercially available allylic ether, APEG-350 (Union Carbide), chemical formula CH₂=CHCH₂O(CH₂CH₂O)ₙH, average molecular weight 350g/mole, and 3.0g of sodium hypophosphite hydrate were used. 14.0g acrylic acid (0.194 moles) and 4.0g of sodium persulfate were added over a 2.5 hour period, and the post-cook time was 2.0 hours at 85° C. The total solids concentration of the resultant sodium hydroxide-neutralized copolymer solution was about 41%.

### Example 4

The superplasticizer admixture prepared in Example 1 was added to concrete prepared using Type I Portland cement, sand, coarse aggregate, and a water to cement ratio of 0.46. The concrete was prepared according to ASTM C-192 and was mixed for about 9 minutes, at which time a sample was removed for measurement of an initial slump value. After the initial slump test sample was returned to the mixer, a sufficient amount of the superplasticizer admixture solution was added to provide a copolymer solids concentration of 0.05%, based on the weight of Portland cement in the concrete (expressed as % solids on solids, or "%s/s".) From this point, slump measurements were taken at 18, 30, 45 and 60 minutes. The slump of the concrete was measured in accordance with ASTM C-143. Additionally, air entrainment was also measured with time in accordance with ASTM C-231, and 1, 7 and 28 day compressive strengths were measured in accordance with ASTM C-39.

The test run above was performed on two other concretes prepared in the same manner, and side by side with the previous concrete, except that to one of these concretes was added the superplasticizer of Example 2, in the same manner and amount as above. To the other was added a solution of a commercially-available superplasticizer, WRDA-19 (W. R. Grace & Co.-Conn.), in the same manner as above, at a solids concentration of 0.25% s/s as defined above.

Table 1 presents the measured slumps, which are also graphically depicted in Figure 1, where the legends 1a, 1b and 1c correspond to the slumploss of the concretes containing the additive of Example 1, the additive of Example 2, and the commercially-available WRDA-19, respectively. Table 2 presents the compressive strength measurements. The data show that the admixtures of the invention acts as an effective superplasticizer with results superior to that of the WRDA-19. Even though the dosage of the superplasticizers of the invention was smaller than that of the commercially available superplasticizer, the slump achieved was greater and the slump retention of the concretes was better. In addition, the compressive strength of the hardened concretes was about the same as that obtained with the commercially available superplasticizer.

### Example 5

The superplasticizers of Examples 1 and 3 were tested in concrete using the materials, equipment and conditions of Example 4. The water to cement ratio used was 0.47. Table 3 presents the measured slumps, which are also graphically depicted in Figure 2, where the legends 2a and 2b correspond to the slumploss of the concretes containing the additive of Example 1, the additive of Example 3, respectively. Table 4 presents the compressive strength measurements. The data show that the superplasticizer comprising the higher molecular weight allylic ether had higher initial slump than that of the lower molecular weight allylic ether, but both superplasticizers have comparable slumploss performance. In addition, the compressive strengths obtained from the concrete containing the superplasticizer of Example 3 are as good as that of the superplasticizer of Example 1. Although the air entrainment on these concretes are higher than those of the previous example, it is possible to add an air detrainer in a needed amount to control the air in the concrete if desired.

**TABLE 1**

| (min) | Copolymer of Example 1 | | Copolymer of Example 2 | | WRDA-19 | |
|---|---|---|---|---|---|---|
| | Slump(in) | Air(%) | Slump | Air | Slump | Air |
| 9 | 2.00 | 1.9 | 1.75 | 2.2 | 2.25 | 2.0 |
| 18 | 8.00 | 3.9 | 8.00 | 5.0 | 7.25 | 2.5 |
| 30 | 7.25 | 4.1 | 5.50 | 5.4 | 4.50 | 2.4 |
| 45 | 4.00 | 3.3 | 4.50 | 5.3 | 2.50 | 2.1 |
| 60 | 3.25 | 3.0 | 3.75 | 3.0 | 2.50 | 2.0 |

**TABLE 2**

| Compressive Strength (psi) | Copolymer of Example 1 | Copolymer of Example 2 | WRDA-19 |
|---|---|---|---|
| at 1 day | 1938 | 1703 | 2105 |
| at 7 days | 4588 | 4256 | 4779 |
| at 28 days | 5812 | 5883 | 5978 |

**TABLE 3**

| (min) | Copolymer of Example 1 | | Copolymer of Example 3 | |
|---|---|---|---|---|
| | Slump(in) | Air(%) | Slump | Air |
| 9 | 2.50 | 2.0 | 2.50 | 1.9 |
| 18 | 8.75 | 5.6 | 7.75 | 5.4 |
| 30 | 7.75 | 5.9 | 7.00 | 5.0 |
| 45 | 5.50 | 4.4 | 4.75 | 4.8 |
| 60 | 2.50 | 3.6 | 2.75 | 3.9 |

**TABLE 4**

| Compressive Strength (psi) | Copolymer of Example 1 | Copolymer of Example 3 |
|---|---|---|
| at 1 day | 1527 | 1761 |
| at 7 days | 4664 | 4440 |
| at 28 days | 5947 | 6032 |

## Claims

1. A copolymer comprising
a) an olefinic mono-carboxylic acid comonomer or an ester or salt thereof, or an olefinic sulfur acid comonomer or a salt thereof, copolymerized with
b) an ether comonomer of the formula
X-O-R¹ ;
wherein X represents an ethylenically-unsaturated hydrocarbon group having from 2 to 5 carbon atoms or an unsaturated acyl group having from 2 to 5 carbon atoms, R¹ is a polyalcohol group, an alkylene oxide derivative of said polyalcohol group, or a polyether of the formula
-(R²O-)ₙ-R³ ,
wherein R² is a linear or branched, substituted or unsubstituted C₁ to C₄ alkylene group, R³ is hydrogen, a C₁ to C₄ alkyl group, or a group conforming to the formula 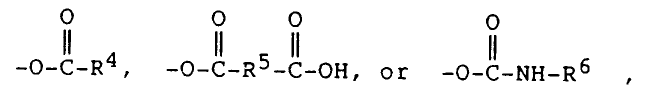 wherein R⁴, R⁵, and R⁶ may each be an alkyl, aryl, aralkyl, or alkaryl group, and n is an integer from 1 to 50.

2. The copolymer of claim 1 comprising at least two different olefinic comonomers, copolymerized with said ether.

3. The copolymer of claim 1 comprising at least two different ether comonomers, copolymerized with said olefinic comonomer.

4. The copolymer of claim 1 wherein the mole ratio of said olefinic comonomer to said ether comonomer is in the range of from about 1:0.01 to 0.5:1.

5. The copolymer of claim 2 wherein the mole ratio of said olefinic comonomers to said ether comonomer is in the range of from about 1:0.01 to 0.5:1.

6. The copolymer of claim 3 wherein the mole ratio of said olefinic comonomer to said ether comonomers is in the range of from about 1:0.01 to 0.5:1.

7. The copolymer of claim 1, wherein
a) the mole ratio of said olefinic comonomer to said ether comonomer is in the range of from about 1:0.3 to 0.7:1, and
b) X of said ether comonomer is an allyl group, R¹ is said polyether, R² is ethylene, R³ is hydrogen, n is in the range of from 5 to 20, and said olefinic comonomer is acrylic acid or a salt thereof.

8. The copolymer of claim 3, wherein
a) the mule ratio of said olefinic comonomer to said ether comonomers is in the range of from about 1:0.3 to 0.7:1, and
b) X of said ether comonomers is an allyl group, R¹ is said polyether, R² is ethylene, R³ is hydrogen, n is in the range of from 5 to 20, and said olefinic comonomer is acrylic acid or a salt thereof.

9. The copolymer of claim 1 wherein said olefinic comonomer is selected from the group consisting of acrylic acid, methacrylic acid, crotonic acid, isocrotonic acid, allyl sulfonic acid, vinyl sulfonic acid, salts thereof, and alkyl or hydroxyalkyl esters thereof.

10. The copolymer of claim 1 further comprising copolymerized styrene.

11. The copolymer of claim 1 further comprising copolymerized acrylamide.

12. The copolymer of claim 1, wherein X of said ether comonomer is an allyl group, R¹ is said polyether, R² is a linear alkylene group of of the formula CₙH₂ₙ wherein n is an integer from 1 to 4, and R³ is hydrogen.

13. The copolymer of claim 1 wherein X is an allylic or methallylic group.

14. A cement composition comprising a hydraulic cement binder and a copolymer comprising
a) an olefinic mono-carboxylic acid comonomer or an ester or salt thereof, or an olefinic sulfur acid comonomer or a salt thereof, copolymerized with
b) an ether comonomer of the formula
X-O-R¹ ;
wherein X represents an ethylenically-unsaturated hydrocarbon group having from 2 to 5 carbon atoms or an unsaturated acyl group having from 2 to 5 carbon atoms, R¹ is a polyalcohol group, an alkylene oxide derivative of said polyalcohol group, or a polyether of the formula
-(R²O-)ₙ-R³ ,
wherein R² is a linear or branched, substituted or unsubstituted C₁ to C₄ alkylene group, R³ is hydrogen, a C₁ to C₄ alkyl group, or a group conforming to the formula 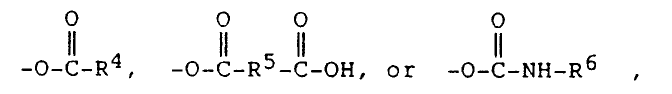 wherein R⁴, R⁵, and R⁶ may each be an alkyl, aryl, aralkyl, or alkaryl group, and n is an integer from 1 to 50.

15. The composition of claim 14 comprising at least two different olefinic comonomers, copolymerized with said ether.

16. The composition of claim 14 comprising at least two different ether comonomers, copolymerized with said olefinic comonomer.

17. The composition of claim 14 wherein the mole ratio of said olefinic comonomer to said ether comonomer is in the range of from about 1:0.01 to 0.5:1.

18. The composition of claim 15 wherein the mole ratio of said olefinic comonomers to said ether comonomer is in the range of from about 1:0.01 to 0.5:1.

19. The composition of claim 16 wherein the mole ratio of said olefinic comonomer to said ether comonomers is in the range of from about 1:0.01 to 0.5:1.

20. The composition of claim 14, wherein
a) the mole ratio of said olefinic comonomer to said ether comonomer is in the range of from about 1:0.3 to 0.7:1, and
b) X of said ether comonomer is an allyl group, R¹ is said polyether, R² is ethylene, R³ is hydrogen, n is in the range of from 5 to 20, and said olefinic comonomer is acrylic acid or a salt thereof.

21. The composition of claim 16, wherein
a) the mole ratio of said olefinic comonomer to said ether comonomers is in the range of from about 1:0.3 to 0.7:1, and
b) X of said ether comonomers is an allyl group, R¹ is said polyether, R² is ethylene, R³ is hydrogen, n is in the range of from 5 to 20, and said olefinic comonomer is acrylic acid or a salt thereof.

22. The composition of claim 14 wherein X of said ether comonomer is an allyl group, R¹ is said polyether, R² is a linear alkylene group of of the formula CₙH₂ₙ wherein n is a number from 1 to 4, and R³ is hydrogen.

23. The composition of claim 14 wherein X is an allylic or methallylic group.

24. A method of fluidifying a wet cement composition comprising the step of adding to a wet cement composition a copolymer comprising
a) an olefinic mono-carboxylic acid comonomer or an ester or salt thereof, or an olefinic sulfur acid comonomer or a salt thereof, copolymerized with
b) an ether comonomer of the formula
X-O-R¹ ;
wherein X represents an ethylenically-unsaturated hydrocarbon group having from 2 to 5 carbon atoms or an unsaturated acyl group having from 2 to 5 carbon atoms, R¹ is a polyalcohol group, an alkylene oxide derivative of said polyalcohol group, or a polyether of the formula
-(R²O)ₙ-R³ ,
wherein R² is a linear or branched, substituted or unsubstituted C₁ to C₄ alkylene group, R³ is hydrogen, a C₁ to C₄ alkyl group, or a group conforming to the formula 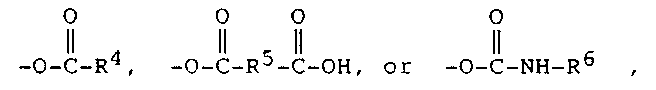 wherein R⁴, R⁵, and R⁶ may each be an alkyl, aryl, aralkyl, or alkaryl group, and n is an integer from 1 to 50.

25. The method of claim 24 comprising at least two different olefinic comonomers, copolymerized with said ether.

26. The method of claim 24 comprising at least two different ether comonomers, copolymerized with said olefinic comonomer.

27. The method of claim 24 wherein the mole ratio of said olefinic comonomer to said ether comonomer is in the range of from about 1:0.01 to 0.5:1.

28. The method of claim 24 wherein the mole ratio of said olefinic comonomers to said ether comonomer is in the range of from about 1:0.01 to 0.5:1.

29. The method of claim 25 wherein the mole ratio of said olefinic comonomer to said ether comonomers is in the range of from about 1:0.01 to 0.5:1.

30. The method of claim 24, wherein
a) the mole ratio of said olefinic comonomer to said ether comonomer is in the range of from about 1:0.3 to 0.7:1, and
b) X of said ether comonomer is an allyl group, R¹ is said polyether, R² is ethylene, R³ is hydrogen, n is in the range of from 5 to 20, and said olefinic comonomer is acrylic acid or a salt thereof.

31. The method of claim 25, wherein
a) the mole ratio of said olefinic comonomer to said ether comonomers is in the range of from about 1:0.3 to 0.7:1, and
b) X of said ether comonomers is an allyl group, R¹ is said polyether, R² is ethylene, R³ is hydrogen, n is in the range of from 5 to 20, and said olefinic comonomer is acrylic acid or a salt thereof.

32. The method of claim 24 wherein X of said ether comonomers is an allyl group, R¹ is said polyether and R² is a linear alkylene group of of the formula CₙH₂ₙ wherein n is a number from 1 to 4.

33. The method of claim 24 wherein X is an allylic or methallylic group.
